# EUROPÄISCHE PATENTANMELDUNG

(11) **EP 4 343 207 A1**
(43) Veröffentlichungstag der Anmeldung: **27.03.2024**
(21) Anmeldenummer: 23199047.4
(22) Anmeldetag: 22.09.2023
(51) Int. Cl.: F24C 3/12, A21B 1/28

(54) **BACKOFEN MIT BRENNKAMMERDRUCKREGELUNG**

(30) Priorität: 26.09.2022 DE 102022124698
(71) Anmelder: MIWE Michael Wenz GmbH, 97450 Arnstein (DE)
(72) Erfinder: Illek, Joachim, 97450 Arnstein (DE); Scheuring, Matthias, 97450 Arnstein (DE); Fuller, Carsten, 97450 Arnstein (DE); Leppich, Peter, 97450 Arnstein (DE)
(74) Vertreter: Freischem & Partner Patentanwälte mbB

(57) **Zusammenfassung**

Die Erfindung betrifft einen Backofen (1) mit
- mindestens einem Backraum (2);
- einem Brenner (4) mit einer Brennkammer (5);
- mindestens einem fluidal mit der Brennkammer (5) verbundenen Rauchgaskanalsystem, das durch einen Rauchgasabgang (15) fluidal mit einem Kamin verbunden ist, wobei der Rauchgasabgang (15) mit einer Verschlussvorrichtung (16) teilweise verschlossen ist; und
- mindestens einem Gebläse (9), das Rauchgase durch das Rauchgaskanalsystem und/oder den Kamin bewegt.

Aufgabe der Erfindung ist es, einen solchen Backofen derart fortzubilden, dass die Verbrennung mit dem Brenner bei jedem Betriebspunkt des Backofens optimal, d.h. effizient und sauber, ist.

Zur Lösung der Aufgabe sind mindestens ein Sensor (21) zum Messen einer Messgröße in der Brennkammer (5) und/oder in dem Rauchgaskanalsystem und eine Steuerungseinheit (18) vorgesehen, wobei die Stellung der Verschlussvorrichtung (16) mittels eines von der Steuerungseinheit (18) gesteuerten Aktors (17) in Abhängigkeit von der gemessenen Messgröße einstellbar ist.

## Beschreibung

Die Erfindung betrifft einen Backofen mit mindestens einem Backraum; einem Brenner mit einer Brennkammer; mindestens einem fluidal mit der Brennkammer verbundenen Rauchgaskanalsystem, das durch einen Rauchgasabgang fluidal mit einem Kamin verbunden ist, wobei der Rauchgasabgang mit einer Verschlussvorrichtung teilweise verschlossen ist; und mindestens einem Gebläse, das Rauchgase durch das Rauchgaskanalsystem und/oder den Kamin bewegt.

Backöfen mit den obigen Merkmalen sind aus dem Stand der Technik bekannt. Bei diesen Backöfen wird der Backraum durch das mit dem Brenner erzeugte Rauchgas beheizt. Zu diesem Zweck bewegt das Gebläse den mittels des Brenners erzeugten Rauchgasstrom durch das Rauchgaskanalsystem. Das Rauchgaskanalsystem, das auch als Rauchgaskanal bezeichnet wird, ist ein im Wesentlichen geschlossener Kreislauf, welcher zumindest abschnittsweise am Backraum vorbeigeführt ist. Das im Rauchgaskanalsystem geführte Rauchgas erhitzt die Wandung des Rauchgaskanalsystems. Von der Wandung des Rauchgaskanalsystems wird die Wärme auf die Atmosphäre im Backraum übertragen. Ferner erhitzt die von der Wandung ausgehende Wärmestrahlung die in den Backraum eingebrachten Backwaren. Aufgrund des im Wesentlichen geschlossenen Kreislaufs des Rauchgaskanalsystems gelangen die Backwaren nicht mit dem Rauchgasstrom in Kontakt. Alternativ kann mit dem im Rausgaskanal geführten Rauchgas mittels eines Wärmetauschers die umgewälzte Backatmosphäre erhitzt werden.

Zum Erzeugen des Rauchgases weist der Brenner in der Regel eine eigene Luftzufuhr und eine eigene Brennstoffzufuhr auf. In der Brennkammer wird der Brennstoff mit der Luft verbrannt, wobei das in das Rauchgaskanalsystem einströmende Rauchgas entsteht. Damit in dem Rauchgaskanalsystem kein Überdruck entsteht, wenn das Rauchgas einströmt, ist das Rauchgaskanalsystem nicht als vollständig geschlossener Kreislauf ausgebildet, sondern es weist den fluidal mit dem Kamin verbundenen Rauchgasabgang auf, welcher teilweise mit der Verschlussvorrichtung verschlossen ist. Durch den Rauchgasabgang kann ein Teil des Rauchgasstroms aus dem Rauchgaskanalsystem in den Kamin abströmen.

In der Regel wird die Verschlussvorrichtung am Rauchgasabgang bei einer Inbetriebnahme eines Backofens für einen vorbestimmten Betriebspunkt eingestellt. Die Einstellung erfolgt dabei derart, dass der Rauchgasabgang mehr oder weniger von der Verschlussvorrichtung verschlossen ist. Beispielsweise kann der durchströmbare Querschnitt des Rauchgasabgangs mit der Verschlussvorrichtung verkleinert oder vergrößert werden. Alternativ kann die Verschlussvorrichtung derart am Rauchgaskanalsystem angeordnet werden, dass der Rauchgasstrom beim Abströmen aus dem durchströmbaren Querschnitt umgelenkt und teilweise rückgestaut wird. Die Einstellung der Verschlussvorrichtung hat zum Ziel, dass die Verbrennung bei einem Sollbetrieb des Brenners zum Betreiben des Backofens bei dem vorbestimmten Betriebspunkt besonders effizient und sauber ist. Die bei der Inbetriebnahme des Backofens erfolgte Einstellung der Verschlussvorrichtung ist regelmäßig statisch, d.h. die Verschlussvorrichtung wird bei aus dem Stand der Technik bekannten Backöfen während des Backofenbetriebs und/oder nach Veränderungen an dem Backofen nicht erneut eingestellt.

Aufgrund der statischen Einstellung der Verschlussvorrichtung ist die Verbrennung mit dem Brenner bei Betriebspunkten außerhalb des bei der Inbetriebnahme berücksichtigten Betriebspunktes nicht optimal. Beispielsweise strömen, wenn das Rauchgas kalt ist, relativ große Rauchgasmassen durch den Kamin ab, was zu einem verringerten Druck im Rauchgaskanalsystem führt. Hierdurch kann der Volumenstrom der Rauchgasmassen derart beeinflusst werden, dass letztlich ein Flammabriss am Brenner verursacht wird. Wenn das Rauchgas hingegen heiß ist, strömen relativ geringe Rauchgasmassen durch den Kamin ab. Hierdurch kann ein hoher Druck im Rauchgaskanalsystem entstehen, so dass das Luft-Brennstoff-Gemisch gegen einen erhöhten Druck in die Brennkammer eingebracht werden muss. Dadurch wird der Volumenstrom, welcher vom Gebläse des Brenners gefördert wird, verringert. Hierdurch besteht die Gefahr eines Luftmangels bei der Verbrennung.

Aus DE 10 2008 012 395 A1 ist ein Backofen mit einem Backraum bekannt. Der Backraum ist mit einer Austrittsöffnung versehen, durch die Luft aus dem Backraum entweichen kann. In einem Bereich der Austrittsöffnung ist ein Drosselelement angeordnet, wobei das Drosselelement mit einem durch ein Regelmodul geregelten Antrieb gekoppelt ist und wobei auf der zum Backraum liegenden Seite des Drosselelements ein erster Drucksensor angeordnet ist, der mit dem Regelmodul verbunden ist. Der aus DE 10 2008 012 395 A1 bekannte Backofen wird mit Luft und/oder Wasserdampf als Heizmedium auf die für das Backen erforderliche Temperatur erhitzt. Es ist kein Rauchgaskanal mit einem Rauchgasabgang vorgesehen, der mit einer Verschlussvorrichtung teilweise verschlossen ist.

Aus DE 10 2014 109 855 A1 ist zudem eine Backofenvorrichtung zum Backen von Holzofenbrot bekannt. Die Backofenvorrichtung umfasst einen Backraum, eine Zündkammer und ein Gebläse. Die Zündkammer ist vor einer Einlassöffnung des Backraums angeordnet. Durch Luftströmungsöffnungen wird der Zündkammer Luft hinzugefügt, so dass ein bei der Verbrennung von Holzbrennstoffstücken entstehendes Rauchgas den Backraum unmittelbar beheizen und aus einer Rauchgasöffnung des Backraumes abgeleitet werden kann. In einem Rauchgaskanal hinter der Rauchgasöffnung kann eine beeinflussbare Kaminklappe zur Drosselung der Rauchgasströmung im Rauchgaskanal vorgesehen sein kann. Dabei ist die Stellung der Kaminklappe mittels einer Steuerungsvorrichtung anhand von vorgegebenen oder von einstellbaren Parametern einstellbar. Ein in der DE 10 2014 109 855 A1 offenbarter Flammensensor ist nicht zur Regelung der Kaminklappe vorgesehen oder geeignet.

Aufgabe der Erfindung ist es, einen gattungsgemäßen Backofen derart fortzubilden, dass die Verbrennung mit dem Brenner bei jedem Betriebspunkt des Backofens optimal, d.h. effizient und sauber, ist. Ferner sollen mit dem Backofen die Sicherheit und die Stabilität der Verbrennung verbessert werden.

Diese Aufgabe wird gelöst durch einen Backofen mit der Gesamtheit der Merkmale des Patentanspruchs 1.

Insbesondere weist der hier beschriebene Backofen zur Lösung der Aufgabe zusätzlich zu den gattungsgemäßen Merkmalen mindestens einen Sensor zum Messen einer Messgröße in der Brennkammer und/oder in dem Rauchgaskanalsystem und eine Steuerungseinheit auf, wobei die Stellung der Verschlussvorrichtung mittels eines von der Steuerungseinheit gesteuerten Aktors in Abhängigkeit von der gemessenen Messgröße einstellbar ist.

Mit anderen Worten ausgedrückt, ist die Verschlussvorrichtung beweglich am Rauchgasabgang angeordnet und/oder ausgebildet, so dass die Verschlussvorrichtung und die Menge der durch den Rauchgasabgang abströmenden Rauchgasmassen mit dem Aktor flexibel eingestellt werden können. Aufgrund des mit der Steuerungseinheit verbundenen Sensors können die durch den Rauchgasabgang abströmenden Rauchgasmassen in Abhängigkeit einer in der Brennkammer und/oder in dem Rauchgaskanalsystem gemessenen Messgröße geregelt werden. Die Messgröße ist insbesondere eine Messgröße, mit welcher auf die Effizienz und/oder die Sauberkeit der Verbrennung des Brenners geschlossen werden kann.

In diesem Zusammenhang misst der Sensor die Messgröße und übermittelt das Messergebnis an die Steuerungseinheit. In der Steuerungseinheit ist ein Speicher integriert, in welchem ein Sollwert für die Messgröße gespeichert ist. Die mittels des Sensors gemessene Messgröße wird in der Steuerungseinheit mit dem Sollwert verglichen. Alternativ kann ein Sollwert verwendet werden, der von der Steuerungseinheit berechnet wird. In den berechneten Sollwert können weitere gemessene Werte einfließen wie Außentemperatur, Temperatur der Backatmosphäre usw. In Abhängigkeit von dem Vergleichsergebnis kann der Aktor von der Steuerungseinheit gesteuert werden, um die Stellung der Verschlussvorrichtung und somit die Menge der durch den Rauchgasabgang abströmenden Rauchgasmassen zu verändern. Dadurch kann der Druck im Rauchgaskanalsystem und in der Brennkammer aktiv und insbesondere automatisch gesteuert bzw. geregelt werden. Denn aufgrund der Verstellung des Aktors wird der mit dem Sensor gemessene Messwert beeinflusst und die Steuerung des Aktors mit der Steuerungseinheit entsprechend angepasst. Zu diesem Zweck kann der Sensor die Messgröße insbesondere in regelmäßigen Abständen messen. So kann die gemessene Messgröße beispielsweise in einem vorbestimmten Toleranzbereich um einen Sollwert gebracht bzw. gehalten werden. Im Ergebnis kann die Effizienz und die Sauberkeit der Verbrennung mit einer technisch besonders einfachen Maßnahme beeinfluss werden.

Mit dem hier beschriebenen Backofen ist die Einstellung der Verschlussvorrichtung nicht statisch, sondern flexibel. Sie kann insbesondere während des laufenden Backofenbetriebs und/oder nach Veränderungen an dem Backofen neu eingestellt werden. Dadurch kann die Verbrennung für eine Vielzahl von Betriebspunkten, und nicht nur für den bei der Inbetriebnahme des Backofens berücksichtigten Betriebspunkt, optimiert werden. Wenn das Rauchgas beispielsweise kalt ist, kann die Verschlussvorrichtung mit dem Aktor so eingestellt werden, dass der Rauchgasabgang zum Großteil verschlossen ist. Dadurch wird der sonst relativ große Abstrom von kalten Rauchgasmassen reduziert. Wenn das Rauchgas hingegen beispielsweise heiß ist, kann die Verschlussvorrichtung mit dem Aktor so eingestellt werden, dass der Rauchgasabgang nur wenig verschlossen ist. Dadurch wird der sonst relativ geringe Abstrom von heißen Rauchgasmassen erhöht. Im Ergebnis kann der Druck in Rauchgaskreislauf unabhängig von der Rauchgastemperatur auf einen gewünschten Wert eingestellt werden.

In der Praxis kann der Sensor ein Druckmesssensor zum Messen eines Drucks sein. Die Messung des Drucks ist technisch einfach und Druckmesssensoren sind kommerziell günstig erhältlich. Ferner ist durch die Messung des Drucks eine direkte Bewertung der durch den Aktor vorgenommenen Veränderung der Stellung der Verschlussvorrichtung möglich. Insbesondere kann besonders schnell und einfach bewertet werden, ob durch eine Veränderung der Stellung der Verschlussvorrichtung der gemessene Druck einem in der Steuerungseinheit gespeicherten Solldruck angenähert wird. Der Druck in der Brennkammer nimmt außerdem direkt Einfluss auf die Effizienz und die Sauberkeit der Verbrennung. Bei einer bevorzugten Ausführungsform misst der Druckmesssensor einen relativen Druck in dem Rauchgas gegenüber einem Umgebungsdruck außerhalb des Backofens.

Ferner kann in der Praxis eine erste Messleitung fluidal mit der Brennkammer verbunden sein, wobei der Sensor in oder an der ersten Messleitung angeordnet ist. Die Messleitung ist eine nur zur Brennkammer offene und ansonsten geschlossene Röhre mit einem geringen Durchmesser. In der Messleitung befindet sich somit Rauchgas, das mit dem Rauchgas in der Brennkammer in Verbindung steht. Der in oder an der Messleitung angeordnete Sensor misst somit durch die Messleitung eine Messgröße innerhalb der Brennkammer. Die Anordnung des Sensors in oder an der Messleitung erlaubt eine einfache Zugänglichkeit zu dem Sensor. Ferner wird der Sensor nicht durch die Hitze des Brenners beeinflusst.

In der Praxis kann der Backofen ein Etagenbackofen sein. Wenn der Backofen als ein Etagenbackofen ausgebildet ist, wird der Backraum auch als Backherd bezeichnet. Etagenbackofen weisen regemäßig eine Mehrzahl von übereinander angeordneten Backherden zur Aufnahme von Backgut auf. Das Einbringen und Entnehmen des Backguts erfolgt über den Backherden zugeordnete Ofentüren. Das Rauchgaskanalsystem weist bei einem Etagenbackofen mindestens einen Zustromkanal, eine Mehrzahl von Heizradiatoren und einen Rückstromkanal auf. Der Zustromkanal ist stromabwärts der Brennkammer des Brenners angeordnet und von dem Zustromkanal sind die Heizradiatoren abgezweigt. Die Heizradiatoren sind oberhalb und unterhalb der Backherde angeordnet und von dem Rauchgas durchströmbar. Stromabwärts der Heizradiatoren ist der Rückstromkanal angeordnet, welcher das Rauchgas zurück zum Zustromkanal führt. Für das Beheizen der Backherde strömt das Rauchgas von der Brennkammer über den Zustromkanal in die einzelnen, den Backherden zugeordneten Heizradiatoren und von dort in den Rückstromkanal. Über die Heizradiatoren wird die Wärme des Rauchgases in die einzelnen Backherde überführt. Dabei sind die Heizradiatoren häufig als mäanderförmiger Kanalabschnitt ausgebildet, so dass die Backherde mit einer gleichmäßigen Oberhitze und Unterhitze beheizt werden.

Wenn der Backofen ein Etagenofen ist, kann der Rauchgasabgang insbesondere in einer Wandung des stromabwärts an die Brennkammer angeschlossenen Zustromkanals angeordnet sein. Diese Positionierung erlaubt es, besonders schnell auf Druckveränderungen in dem Rauchgaskanalsystem, die durch die Verbrennung verursacht worden sind, zu reagieren.

Bei einer bevorzugten Ausführungsform ist der Rauchgasabgang insbesondere in einer zu einer Vorderseite des Backofens orientierten Wandung des Rauchgaskanalsystems eingebracht. Diese Positionierung gestattet eine besonders gute Zugänglichkeit zu der Verschlussvorrichtung und dem Aktor.

In der Praxis kann die Verschlussvorrichtung eine Abgasklappe sein. Die Abgasklappe kann mit einem Gelenk an dem Rauchgaskanalsystem um eine Schwenkachse zwischen einer ersten Stellung und einer zweiten Stellung schwenkbar angeordnet sein. In der ersten Stellung verschließt die Abgasklappe den Rauchgasabgang vollständig und in der zweiten Stellung gibt sie den Rauchgasabgang im Wesentlichen vollständig frei. Durch die schwenkbare Anordnung kann die Abgasklappe in jede zwischen der ersten Stellung und der zweiten Stellung mögliche Stellung gebracht werden und somit den Rauchgasabgang teilweise verschließen bzw. freigeben. Die Verschlussvorrichtung kann aber auch jede andere geeignete Drosselvorrichtung sein, durch deren Verstellung der Strömungswiderstand des Raugasabgangs verändert wird. So kann die Verschlussvorrichtung ein Schieber mit einer Öffnung sein, die in einer ersten Endstellung nicht mit dem Rauchgasabgang überlagert ist, so dass der Rauchgasabgang vollständig verschlossen ist, und in einer zweiten Endstellung die maximale Überlagerung mit dem Rauchgasabgang aufweist, so dass dieser geöffnet ist. Auch kann eine Blendenanordnung als Verschlussvorrichtung vorgesehen sein, welche eine Öffnung mit verstellbarem Durchmesser bildet.

Der Aktor kann in der Praxis ein Stellmotor sein, welcher mit der Verschlussvorrichtung mittels eines Gestänges mechanisch verbunden ist. Der Stellmotor kann dann das Gestänge bewegen, welches aufgrund der mechanischen Verbindung eine Bewegung der Verschlussvorrichtung verursacht. Die Verbindung zwischen dem Stellmotor und dem Gestänge kann beispielsweise starr sein. Die Verbindung zwischen dem Gestänge und der Verschlussvorrichtung kann ebenfalls starr sein, weist bevorzugt jedoch mindestens einen Freiheitsgrad auf.

Für eine Verbindung mit mindestens einem Freiheitsgrad kann die Verschlussvorrichtung beispielsweise als die oben beschriebene Abgasklappe ausgebildet sein und eine orthogonal zur Schwenkachse verlaufende Führung aufweisen, in welcher ein freies Ende des Gestänges verschiebbar befestigt ist. Das Gestänge kann beispielsweise orthogonal zu der Schwenkachse und der Führung angeordnet sein. Wenn der Stellmotor das so angeordnete Gestänge von dem Rauchgasabgang wegbewegt oder es in die Richtung des Rauchgasabgang bewegt, schwenkt die Abgasklappe um die Schwenkachse auf, während das in der Führung angeordnete Ende des Gestänges in der Führung verschoben wird.

Wenn alternativ die Verschlussvorrichtung als Schieber ausgebildet ist, kann der Schieber vor dem Rauchgasabgang direkt durch den Aktor oder indirekt über das Gestänge verschoben werden.

Durch den mittels des Gestänges mit der Verschlussvorrichtung verbundenen Stellmotor kann der Stellmotor an einer Gehäusewand des Backofens angeordnet sein, so dass er im Bedarfsfall schnell und leicht zugängig ist. Ferner ist aufgrund des durch das Gestänge hervorgerufenen Abstandes der Wärmeeinfluss von dem Rauchgaskanalsystem auf den Stellmotor reduziert.

In der Praxis kann eine zweite Messleitung fluidal mit der Brennkammer verbunden sein, wobei in oder an der zweiten Messleitung ein zweiter Sensor zum Messen einer Messgröße in der Brennkammer angeordnet ist. Die zweite Messleitung kann gemäß den obigen Beschreibungen zu der ersten Messleitung ausgebildet sein. Mit der zweiten Messleitung und dem zweiten Sensor werden in der Praxis in regelmäßigen Abständen Rauchgasuntersuchungen durchgeführt. Dadurch, dass der erste Sensor in oder an der ersten Messleitung angeordnet ist, können die Messung des ersten Sensors und die Messung des zweiten Sensors gleichzeitig stattfinden.

Alternativ oder zusätzlich ist die Verwendung weiterer Sensoren möglich, welche Rückschlüsse auf die Qualität der Verbrennung zulassen. So können zum Beispiel mit Gasmesssensoren die Konzentration bestimmter Bestandteile des Brennerabgases, wie zum Beispiel die Sauerstoffkonzentration oder die Konzentration einer anderen Gaskomponente zur Anpassung der Stellung der Verschlussvorrichtung verwendet werden. Die gemessenen Konzentrationen können dazu beispielsweise ebenfalls an die Steuereinheit übertragen werden und in die Berechnung des Sollwertes einfließen, wenn dieser berechnet wird.

Die Erfindung betrifft auch ein Verfahren zum Einstellen eines Brennkammerdrucks in einem Backofen mit den vorgenannten Merkmalen. Insbesondere umfasst der Backofen mindestens einen Backraum; einen Brenner mit einer Brennkammer; mindestens ein fluidal mit der Brennkammer verbundenes Rauchgaskanalsystem, das durch einen Rauchgasabgang fluidal mit einem Kamin verbunden ist, wobei der Rauchgasabgang mit einer Verschlussvorrichtung teilweise verschlossen ist; und mindestens ein Gebläse, das Rauchgase durch das Rauchgaskanalsystem und/oder den Kamin bewegt; wobei mindestens ein Sensor zum Messen einer Messgröße in der Brennkammer und/oder in dem Rauchgaskanalsystem und eine Steuerungseinheit vorgesehen sind, wobei die Stellung der Verschlussvorrichtung mittels eines von der Steuerungseinheit gesteuerten Aktors in Abhängigkeit von der gemessenen Messgröße einstellbar ist.

Das Verfahren zum Einstellen des Drucks an diesem Backofen umfasst mindestens die folgenden Schritte:
- Verbrennen eines Brennstoffs mit dem Brenner bei einem beliebigen Betriebspunkt des Backofens;
- Messen der Messgröße in der Brennkammer oder in dem Rauchgaskanalsystem mittels des Sensors;
- Übermitteln der gemessenen Messgröße an die Steuerungseinheit;
- Vergleichen der gemessenen Messgröße mit einem Sollwert;
- Steuern des Aktors mittels der Steuerungseinheit, wobei die Stellung der Verschlussvorrichtung derart verändert wird, dass sich die gemessene Messgröße dem Sollwert annähert;
- Wenn der gemessene Wert und der Sollwert im Wesentlichen übereinstimmen, Stoppen des Aktors.

Da das Verfahren zur Durchführung an dem oben beschriebenen Backofen geeignet ist, schließt die Beschreibung des Verfahrens auch die oben beschriebenen Merkmale im Zusammenhang mit dem Backofen und deren Vorteile ein, auf welche hiermit verwiesen wird.

In der Praxis kann der Sollwert ein Unterdruck in der Brennkammer gegenüber dem Umgebungsdruck sein. Bevorzugt ist der Sollwert ein Unterdruck in der Brennkammer von mindestens 10 Pascal und höchstens 500 Pascal gegenüber dem Umgebungsdruck. Weiter bevorzugt ist der Sollwert ein Unterdruck in der Brennkammer von mindestens 10 Pascal und höchstens 200 Pascal oder von mindestens 100 Pascal und höchstens 200 Pascal oder von mindestens 300 Pascal und höchstens 400 Pascal. Der Sollwert kann in der Steuerungseinheit gespeichert sein. Alternativ kann der Sollwert von der Steuerungseinheit unter Berücksichtigung weiterer Messgrößen berechnet werden.

Weitere praktische Ausführungsformen und Vorteile der Erfindung sind nachfolgend im Zusammenhang mit den Zeichnungen beschrieben. Es zeigen:
- Fig. 1: den erfindungsgemäßen Backofen, ausgebildet als ein Etagenbackofen, in einer Seitenansicht mit teilweise geschnittener Seitenwand und von der Verschlussvorrichtung teilweise verschlossenem Rauchgasabgang;
- Fig. 2: eine Detailansicht des in Fig. 1 mit II bezeichneten Bereichs des erfindungsgemäßen Backofens mit dem von der Verschlussvorrichtung teilweise verschlossenen Rauchgasabgang;
- Fig. 3: den in Fig. 1 mit II bezeichneten Bereich in einer weiteren Schnittebene;
- Fig. 4: einen Ausschnitt des Backofens aus Fig. 1 ohne Frontblende in einer perspektivischen Ansicht von schräg vorne mit der Verschlussvorrichtung in einer geschlossenen Stellung;
- Fig. 5: die Darstellung aus Fig. 4 mit der Verschlussvorrichtung in einer teilweise geschlossenen Stellung;
- Fig. 6: einen Ablauf des Verfahrens zum Steuern bzw. Regeln der Stellung der Verschlussvorrichtung.

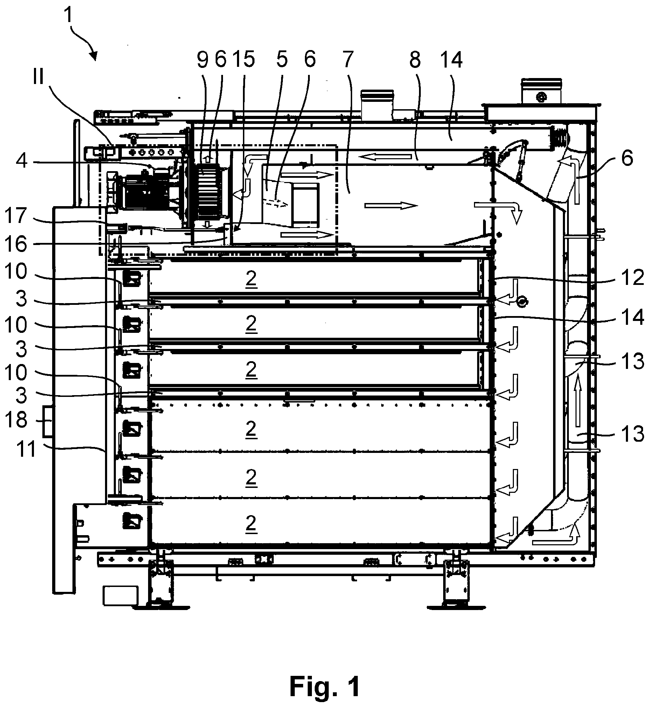

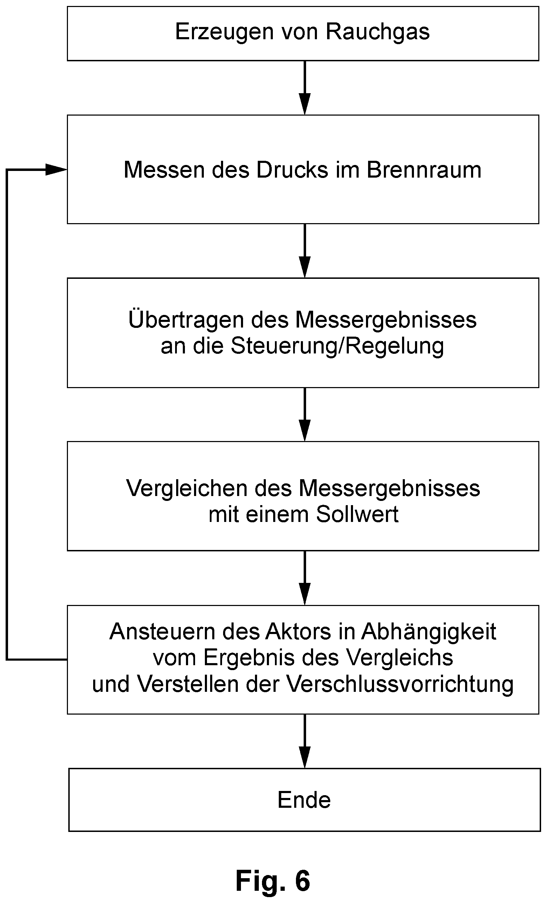

Die Figuren 1 bis 5 zeigen den erfindungsgemäßen Backofen sowie Figur 6 einen Ablauf zum Steuern bzw. Regeln der Stellung der Verschlussvorrichtung mit dem Backofen. In den Figuren sind gleiche Bauteile mit identischen Bezugszeichen versehen.

Fig. 1 zeigt in einer teilweise geschnitten dargestellten Seitenansicht einen als Etagenbackofen ausgebildeten Backofen 1, mit hier insgesamt sechs übereinander angeordneten Backräumen 2, die auch als Backherde bezeichnet werden. Die Backräume 2 sind durch Heizradiatoren 3 in vertikaler Richtung voneinander abgeteilt. Alternativ kann der Backofen 1 auch mehr oder weniger Backräume 2, beispielsweise einen einzigen Backraum 2 aufweisen und/oder die Heizradiatoren 3 können anders ausgebildet sein und beispielsweise entlang der Seitenwand des Backraums oder der Backräume 2 verlaufen.

Oberhalb des obersten Backraums 2 befindet sich ein Brenner 4 mit einer Brennkammer 5 zum Erzeugen von Rauchgas 6a. Das Rauchgas 6a entsteht durch eine Verbrennung eines Brennstoffs mit Luft in der Brennkammer 5 und expandiert dabei in die Brennkammer 5. Das Rauchgas 6a strömt von der Brennkammer 5 in ein Rauchgaskanalsystem ein. Das Rauchgaskanalsystem ist ein im Wesentlichen geschlossener Kreislauf und umfasst die folgenden Elemente: Heizradiatoren 3, einen Zustromkanal 7 zu den Heizradiatoren 3, und einen Rückstromkanal 8 von den Heizradiatoren 3 zurück zum Beginn des Zustromkanals 7. In dem Rauchgaskanalsystem strömt ein Rauchgasstrom 6, welcher das erzeugte Rauchgas 6a und rezykliertes Rauchgas 6b enthält, das durch den Rückstromkanal 8 zurück zum Zustromkanal 7 geströmt ist. Zum Beeinflussen der Bewegung des Rauchgasstroms 6 durch das Rauchgaskanalsystem ist am Übergang des Rückstromkanals 8 zum Zustromkanal 7, d.h. im Bereich des Brenners 4, ein Gebläse 9 angeordnet. Das Gebläse 9 ist als ein Radialgebläse ausgeführt, das die Rauchgase 6b aus dem Rückstromkanal 8 ansaugt und an der Brennkammer 5 vorbei erneut in den Zustromkanal 7 abbläst. Dadurch wird das rezyklierte Rauchgas 6b genutzt, um die Brennkammer 5 zu kühlen. Ferner kann das rezyklierte Rauchgas 6b mit dem erzeugten Rauchgas 6a gemischt werden, um die für den Backprozess benötigte Wärmemenge bereitzustellen.

Wie der Brenner 4, ist zumindest ein erster Abschnitt des Zustromkanals 7 oberhalb des obersten Backraums 2 angeordnet; ein zweiter Abschnitt des Zustromkanals 7 ist an der Rückseite der Backräume 2 angeordnet, welche Backraumtüren 10 der Backräume 2 gegenüberliegt. Die Beheizung der Backräume 2 erfolgt dadurch, dass die in dem Rauchgasstrom 6 gespeicherte Wärme von den Heizradiatoren 3 auf die Atmosphäre in den Backräumen 2 übertragen wird. Wenn der in den Heizradiatoren 3 abgekühlte Rauchgasstrom 6 die Heizradiatoren 3 verlassen hat, wird der Rauchgasstrom 6 durch den Rückstromkanal 8 zurück zu dem Gebläse 9 geführt. Somit bildet der Rauchgasstrom 6 bei dem hier beschriebenen Backofen 1 einen im Wesentlichen geschlossenen Kreislauf.

Die in Fig. 1 dargestellten einzelnen Backräume 2 weisen an einer Frontseite 11 des Etagenbackofens 1 die Backraumtüren 10 zum Verschließen von Beschickungsöffnungen auf. An ihrer rückseitigen Rückwand 12 sind die einzelnen Backräume 2 jeweils durchströmbar mit einer Dampfzuleitung 13 verbunden, wobei die Dampfzuleitungen 13 wiederum durchströmbar mit einem im Rückstromkanal 8 angeordneten Verdampfer 14 verbunden sind, der auch als Schwadenapparat bezeichnet wird. Über die Dampfzuleitungen 13 ist es möglich, einen Dampfschwaden von dem Verdampfer 14 in die einzelnen Backräume 2 zu befördern. Der Schwadenapparat oder Verdampfer 14 ist mit einer Zufuhrleitung für Wasser (nicht dargestellt) verbunden und so ausgelegt, dass er große Wassermengen verdampfen und den Backräumen 2 zuführen kann.

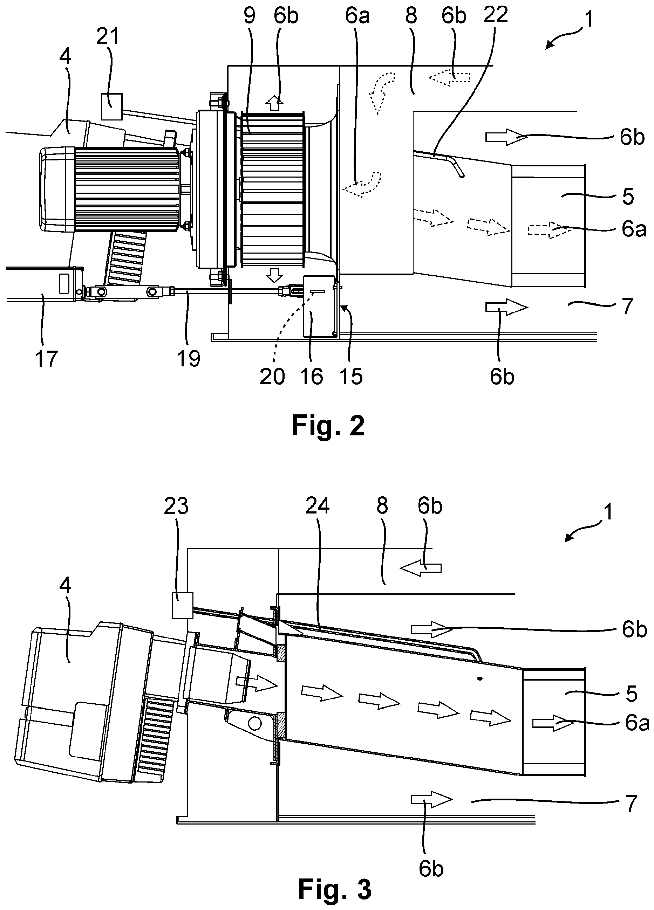

Der Etagenbackofen 1 weist auch einen Rauchgasabgang 15 in einer zur Frontseite 11 des Backofens 1 weisenden Wandung des Rauchgaskanalsystems auf. Der Rauchgasabgang 15 ist mit einer Verschlussvorrichtung 16 teilweise verschlossen und wird im Folgenden insbesondere anhand der Figuren 2 bis 5 erläutert.

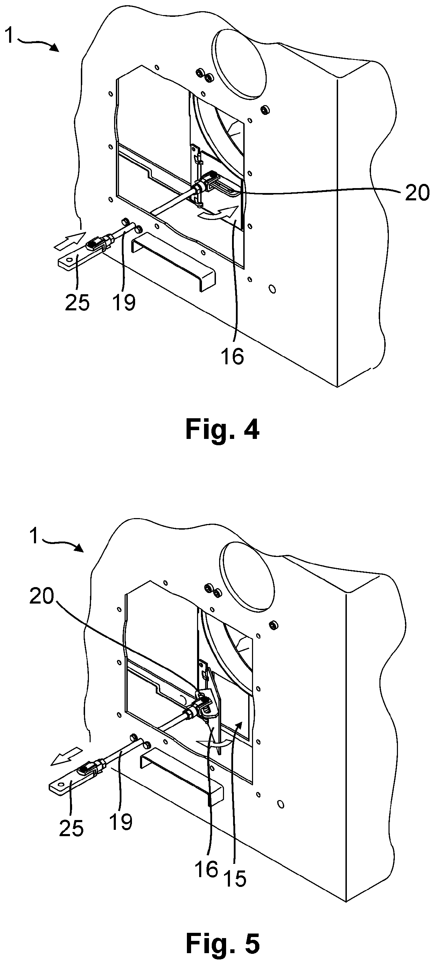

Figur 2 zeigt den in Figur 1 mit II bezeichneten Ausschnitt des Backofens 1 in einer entlang des Rauchgaskanalsystems geschnittenen Darstellung mit dem Brenner 4, der Brennkammer 5, dem Rauchgasstrom 6 (erzeugtes Rauchgas 6a und rezykliertes Rauchgas 6b), dem Zustromkanal 7, dem Rückstromkanal 8, dem Gebläse 9, dem Rauchgasabgang 15 und der Verschlussvorrichtung 16. Der Rauchgasabgang 15 ist als eine durchströmbare Öffnung in der Wandung des Zustromkanals 7 ausgebildet. Die Verschlussvorrichtung 16 ist in Form einer Abgasklappe realisiert, die mittels eines Gelenks an der Wandung des Zustromkanals 7 und vor dem Rauchgasabgang 15 schwenkbar angeordnet ist. Durch den Rauchgasabgang 15 ist der Zustromkanal 7 des Rauchgaskanalsystems fluidal mit einem Kamin (in den Figuren nicht dargestellt) verbunden. In Figur 2 sowie in den Figuren 1 und 5 ist der Rauchgasabgang 15 mittels der Abgasklappe 16 teilweise verschlossen gezeigt. Die teilweise geschlossene Stellung der Abgasklappe 16 bedeutet, dass die Abgasklappe 16 schräg vor dem Rauchgasabgang 15 positioniert ist. Der Rauchgasstrom 6 kann teilweise durch den Rauchgasabgang 15 abströmen, wobei er durch die teilweise geschlossene Stellung der Abgasklappe 16 umgelenkt und teils rückgestaut wird.

In einer alternativen, hier nicht dargestellten Ausführungsform kann die Verschlussvorrichtung 16 als ein Schieber ausgebildet sein, welcher eine oder mehrere Öffnungen aufweist. Der Schieber kann derart vor dem Rauchgasabgang 15 verschiebbar ist, dass der Grad der Überdeckung seiner Öffnungen mit dem Rauchgasabgang und damit der durchströmbare Querschnitt des Rauchgasabgangs 15 verändert wird. Der Rauchgasstrom 6 wird dann nicht umgelenkt, aber ebenfalls teils rückgestaut.

Durch die teilweise geschlossene bzw. teilweise geöffnete Stellung der Abgasklappe 16 kann der Rauchgasstrom 6 einfach und zielgenau aufgeteilt werden, wobei ein erster Teil des Rauchgasstroms 6 aus dem Zustromkanal 7 durch den Rauchgasabgang 15 in den Kamin abströmt. Der nicht abströmende zweite Teil des Rauchgasstroms 6 wird durch den Zustromkanal 7 in die Heizradiatoren 3 geleitet, wie oben beschrieben. In der Praxis wird die Abgasklappe 16 so eingestellt, dass im Wesentlichen der gleiche Massestrom an Rauchgas durch den Rauchgasabgang 15 abströmt, wie durch den Brenner 4 erzeugt wird. Dadurch bleibt der Druck im Rauchgaskanalsystem und in der Brennkammer 5 unabhängig von der gewählten Brennerleistung, der erzeugten Rauchgasmenge und/oder der Temperatur des Rauchgases im Wesentlichen konstant und es entsteht insbesondere kein unerwünschter Überdruck in dem Kreislauf. Alternativ zu der teilweise geöffneten Stellung kann die Abgasklappe 16 in eine in Figur 4 gezeigte vollständig geschlossene Stellung oder in eine nicht dargestellte vollständig geöffnete Stellung gebracht werden. In der vollständig geschlossenen Stellung kann der Rauchgasstrom 6 nicht mehr in den Kamin abströmen. In der vollständig geöffneten Stellung kann dagegen die maximale Menge an Rauchgas ausströmen.

Das Einstellen der Verschlussvorrichtung 16 erfolgt mittels eines Aktors 17, der von einer Steuerungseinheit 18 gesteuert bzw. geregelt wird. Die Steuerungseinheit 18 ist in bzw. an einem Abschnitt des Gehäuses des Backofens 1 an der Vorderseite und seitlich der Backräume 2 angeordnet. Die Steuerungseinheit 18 ist insbesondere eine elektronische Steuerungseinheit 18 mit einem Schaltkreis, einem Empfänger zum Empfangen von Messdaten und sie führt numerische Berechnungen durch. Sie weist einen Speicher auf und/oder kann in ein Netzwerk eingebunden und derart ausgebildet sein, dass sie mit einem oder mehreren Computern Daten austauschen kann. Der Aktor 17 ist als ein Stellmotor ausgebildet, welcher an der Frontseite 11 des Backofens 1 befestigt ist. Die Abgasklappe 16 und der Stellmotor 17 sind mittels eines Gestänges 19 miteinander verbunden. Das Gestänge 19 und der Stellmotor 17 können in einer technisch einfachen Ausführungsform eine starre Verbindung aufweisen, beispielsweise indem die Drehwelle des Stellmotors 17 und das Gestänge 19 mit einer Langmutter verbunden sind. Alternativ kann zwischen dem Gestänge 19 und dem Stellmotor 17 ein in den Figuren 2, 4 und 5 gezeigter Verbinder 25 angeordnet sein. Der Verbinder 25 ist derart ausgebildet und angeordnet, dass er einen radialen Versatz und/oder einen Winkelversatz zwischen der Drehwelle des Stellmotors 17 und dem Gestänge 19 ausgleichen kann. Dazu wird an die einander zugewandten Enden der Drehwelle des Stellmotors 17 und des Gestänges 19 je ein Gabelkopf aufgeschraubt. Die Gabelköpfe werden mit dem Verbinder 25 mit Federklappbolzen verbunden. Dies erlaubt eine schnelle Montage und/oder einen schnellen Austausch verschlissener Komponenten und in dem Verbinder 25 ist ein Doppelgelenk zum Ausgleichen von Versatz ausgebildet. Die Montage kann bereits zum größten Teil im Werk erfolgen. An der Abgasklappe 16 ist das Gestänge 19 in einer Linearführung 20 verschiebbar und schwenkbar befestigt, wie insbesondere in Figur 4 und Figur 5 zu erkennen ist.

Wenn die Steuerungseinheit 18 den Stellmotor 17 ansteuert, bewegt der Stellmotor 17 das Gestänge 19 in die Richtung des Rauchgasabgangs 15 (Figur 4), oder von dem Rauchgasabgang 15 weg (Figur 5). Das Ziehen bzw. Drücken des Gestänges 19 verursacht eine Verschiebung des an der Abgasklappe 16 befestigten Endes des Gestänges 19 in der Linearführung 20 und ein Verschwenken der Abgasklappe 16 um das Gelenk, mit welchem die Abgasklappe 16 an der Wandung des Zustromkanals 7 befestigt ist. Dabei wird das Gestänge 19 mit geringem Spiel durch eine Öffnung in der Backofenverkleidung geführt und somit in der Richtung der axialen Verlängerung der Welle des Stellmotors 17 gehalten. Wenn der Stellmotor 17 und das Gestänge 19 mittels des Verbinders 25 mit dem Doppelgelenk verbunden sind, wird der Druck von dem Stellmotor 17 auf das Gestänge 19 ausgeübt, ohne dass die Verbindung am Doppelgelenk einknickt, weil das Doppelgelenk eine auf den Druck des Stellmotors 17 angepasste, ausreichend hohe Drehfestigkeit aufweist. Alternativ können der Stellmotor 17 und das Gestänge 19 auch mit dem oben beschriebenen Schieber verbunden sein, und dazu verwendet werden, den Schieber vor dem Rauchgasabgang 15 zu verschieben oder zu verschwenken.

Die Steuerungseinheit 18 steuert den Aktor 17 so an, dass die Verbrennung mit dem Brenner 4 in jedem Betriebspunkt des Backofens 1 optimal, d.h. effizient und sauber, ist. Zu diesem Zweck wird mit einem Druckmesssensor 21 durch eine durchströmbar mit der Brennkammer 5 verbundene, röhrenförmige Messleitung 22 der Druck in der Brennkammer 5 gemessen. Der Druck in der Brennkammer 5 nimmt Einfluss auf die Verbrennung und er kann mittels der Verschlussvorrichtung 16 auf die oben beschriebene Weise einfach variiert werden. Der Druckmesssensor 21 ist funktional mit der Steuerungseinheit 18 verbunden, indem der Druckmesssensor 21 Messdaten an die Steuerungseinheit 18 überträgt. Der Druckmesssensor 21 kann insbesondere ein Differenzdruckmessgerät sein, das einen Druck in der Brennkammer 5 in Relation zu einem Umgebungsdruck der Atmosphäre außerhalb des Backofens 1 misst.

Die Steuerungseinheit 18 steuert den Stellmotor 17 und die Verschlussvorrichtung 16 so, dass in der Brennkammer 5 und in dem Rauchgaskanalsystem ein vorbestimmter Druckbereich eingestellt wird. Ein Solldruckbereich kann beispielsweise ein Unterdruck gegenüber dem Umgebungsdruck von 10 Pascal bis 500 Pascal sein.

Mit dem vorstehend beschriebenen Backofen 1 kann der Druck in der Brennkammer 5 und dem Rauchgaskanalsystem je nach vorbestimmten Solldruck flexibel eingestellt werden. Wenn das Rauchgas beispielsweise kalt ist, strömen häufig relativ große Rauchgasmassen durch den Rauchgasabgang 15 und den Kamin ab. Dadurch sinkt der Druck in der Brennkammer 5, was zu einem Flammenabriss im Brenner 4 führen kann. Bei dem hier beschriebenen Backofen 1 misst der Druckmesssensor 21 im Betrieb den Druck in der Brennkammer 5. Wenn der Druck einen vorbestimmten Solldruckbereich unterschreitet, wird der Aktor 17 von der Steuerungseinheit 18 angesteuert und die Verschlussvorrichtung 16 verschließt den Rauchgasabgang 15 ein Stück mehr als vor dem Steuerungs- oder Regelungseingriff. Dadurch strömt weniger Rauchgas durch den Rauchgasabgang 15 ab. Der Druck in der Brennkammer 5 und dem Rauchgaskanalsystem steigt. Wenn das Rauchgas hingegen beispielsweise heiß ist, strömen relativ geringe Rauchgasmassen durch den Rauchgasabgang 15 und den Kamin ab. Hierdurch kann ein hoher Druck im Rauchgaskanalsystem entstehen. Wenn der Druck einen vorbestimmten Solldruckbereich überschreitet, wird der Aktor 17 von der Steuerungseinheit 18 angesteuert und die Verschlussvorrichtung 16 verschließt den Rauchgasabgang 15 ein Stück weniger als vor dem Steuerungs- oder Regelungseingriff. In der Folge strömt mehr Rauchgas durch den Rauchgasabgang 15 ab. Der Druck in der Brennkammer 5 und dem Rauchgaskanalsystem sinkt.

Zusätzlich zu dem Druckmesssensor 21 kann der Backofen 1 den in Figur 3 gezeigten zweiten Sensor 23 aufweisen. Der zweite Sensor 23 ist mittels einer ebenfalls röhrenförmigen zweiten Messleitung 24 fluidal mit der Brennkammer 5 verbunden. Dadurch ist es möglich, unabhängig von dem Druckmesssensor eine zweite Messgröße in der Brennkammer 5 zu bestimmen. Beispielsweise kann der zweite Sensor 23 ein Sensor zur Bestimmung der Rauchgaszusammensetzung sein, d.h. er bestimmt die Konzentration der Bestandteile des Rauchgases. Eine Messung der Rauchgaszusammensetzung wird regelmäßig zu Sicherheitszwecken durchgeführt. Dadurch, dass die zwei getrennten Messleitungen 22, 24 mit den zwei separaten Sensoren 21, 23 vorgesehen sind, muss der Backofen nicht umgerüstet werden, wenn zwischen zwei Betriebsphasen, bei denen der Druck in der Brennkammer 5 gemessen wird, die Rauchgaszusammensetzung untersucht werden soll.

Figur 6 stellt das vorstehend beschriebene Verfahren zum Einstellen eines vorbestimmten Drucks in der Brennkammer des Backofens anhand eines Ablaufdiagramms dar. In einem ersten Schritt wird in dem Brenner ein Brennstoff mit Luft zu Rauchgas verbrannt. Die Verbrennung erfolgt dabei abhängig von einem eingestellten Betriebspunkt des Backofens, welcher beispielsweise durch eine vorbestimmte Temperatur in den Backräumen bestimmt wird. In einem zweiten Schritt misst der Druckmesssensor den Druck in der Brennkammer. In einem dritten Schritt überträgt der Druckmesssensor das Messergebnis an die Steuerungseinheit 18. Die Steuerungseinheit 18 weist einen Speicher auf, in dem ein Sollwertebereich für den Druck in der Brennkammer gespeichert ist. In einem vierten Schritt vergleicht die Steuerungseinheit 18 den gemessenen Druck mit dem im Speicher gespeicherten Solldruckbereich. In einem fünften Schritt wird der Aktor bzw. der Stellmotor von der Steuerungseinheit 18 in Abhängigkeit des Vergleichsergebnisses angesteuert. Dabei wird der Aktor in Abhängigkeit vom Vergleichsergebnis so gesteuert, dass die Verschlussvorrichtung bzw. die Abgasklappe den Rauchgasabgang mehr oder weniger als vor dem Steuerungs- oder Regelungseingriff verschließt, um den Druck in der Brennkammer - wie oben beschrieben - wieder dem Solldruckbereich anzunähern. Die vorstehend genannten Schritte ab dem Messen des Drucks in der Brennkammer werden so oft wiederholt, bis sich der Druck in der Brennkammer im Bereich des Solldrucks befindet und das Verfahren erst dann beendet. Bevorzugt wird das Verfahren in regelmäßigen Zeitabständen durchgeführt, um einen Unterdruck in der Brennkammer von 120 Pascal gegenüber dem Umgebungsdruck zu halten. Das Verfahren kann insbesondere automatisch, d.h. ohne das Zutun eines Bedieners ablaufen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Backofen, Etagenbackofen
- 2: Backraum
- 3: Heizradiatoren
- 4: Brenner
- 5: Brennkammer
- 6: Rauchgasstrom
- 6a: erzeugtes Rauchgas
- 6b: rezykliertes Rauchgas
- 7: Zustromkanal
- 8: Rückstromkanal
- 9: Gebläse
- 10: Backraumtüren
- 11: Frontseite
- 12: Rückwand
- 13: Dampfzuleitungen
- 14: Verdampfer, Schwadenapparat
- 15: Rauchgasabgang
- 16: Verschlussvorrichtung, Abgasklappe
- 17: Aktor, Stellmotor
- 18: Steuerungseinheit
- 19: Gestänge
- 20: Linearführung
- 21: Druckmesssensor
- 22: erste Messleitung
- 23: zweiter Sensor
- 24: zweite Messleitung
- 25: Verbinder

## Patentansprüche

1. Backofen (1) mit
- mindestens einem Backraum (2);
- einem Brenner (4) mit einer Brennkammer (5);
- mindestens einem fluidal mit der Brennkammer (5) verbundenen Rauchgaskanalsystem, das durch einen Rauchgasabgang (15) fluidal mit einem Kamin verbunden ist, wobei der Rauchgasabgang (15) mit einer Verschlussvorrichtung (16) teilweise verschlossen ist; und
- mindestens einem Gebläse (9), das Rauchgase durch das Rauchgaskanalsystem und/oder den Kamin bewegt;
**dadurch gekennzeichnet, dass**
mindestens ein Sensor (21) zum Messen einer Messgröße in der Brennkammer (5) und/oder in dem Rauchgaskanalsystem und eine Steuerungseinheit (18) vorgesehen sind, wobei die Stellung der Verschlussvorrichtung (16) mittels eines von der Steuerungseinheit (18) gesteuerten Aktors (17) in Abhängigkeit von der gemessenen Messgröße einstellbar ist.

2. Backofen nach Anspruch 1, **dadurch gekennzeichnet, dass** der Sensor (21) ein Druckmesssensor zum Messen eines Drucks ist.

3. Backofen nach einem der Ansprüche 1 oder 2, **dadurch gekennzeichnet, dass** eine erste Messleitung (22) fluidal mit der Brennkammer (5) verbunden ist, wobei der Sensor (21) in oder an der ersten Messleitung (22) angeordnet ist.

4. Backofen nach einem der Ansprüche 1 bis 3, **dadurch gekennzeichnet, dass** der Backofen (1) ein Etagenbackofen (1) ist.

5. Backofen nach einem der Ansprüche 1 bis 4, **dadurch gekennzeichnet, dass** die Verschlussvorrichtung (16) eine Abgasklappe (16) ist.

6. Backofen nach einem der Ansprüche 1 bis 5, **dadurch gekennzeichnet, dass** der Aktor (17) ein Stellmotor (17) ist, welcher mit der Verschlussvorrichtung (16) mittels eines Gestänges (19) mechanisch verbunden ist.

7. Backofen nach einem der Ansprüche 1 bis 6, **dadurch gekennzeichnet, dass** eine zweite Messleitung (24) fluidal mit der Brennkammer (5) verbunden ist, wobei in oder an der zweiten Messleitung (24) ein zweiter Sensor (23) zum Messen einer Messgröße in der Brennkammer (5) angeordnet ist.

8. Verfahren zum Einstellen eines Brennkammerdrucks in einem Backofen mit mindestens einem Backraum; einem Brenner mit einer Brennkammer; mindestens einem fluidal mit der Brennkammer verbundenen Rauchgaskanalsystem, das durch einen Rauchgasabgang fluidal mit einem Kamin verbunden ist, wobei der Rauchgasabgang mit einer Verschlussvorrichtung teilweise verschlossen ist; und mindestens einem Gebläse, das Rauchgase von der Brennkammer durch das Rauchgaskanalsystem und/oder den Kamin bewegt; wobei mindestens ein Sensor zum Messen einer Messgröße in der Brennkammer und/oder in dem Rauchgaskanalsystem und eine Steuerungseinheit vorgesehen sind, wobei die Stellung der Verschlussvorrichtung mittels eines von der Steuerungseinheit gesteuerten Aktors in Abhängigkeit von der gemessenen Messgröße einstellbar ist; und wobei das Verfahren die folgenden Schritte umfasst:
- Verbrennen eines Brennstoffs mit dem Brenner bei einem beliebigen Betriebspunkt des Backofens;
- Messen der Messgröße in der Brennkammer oder in dem Rauchgaskanalsystem mittels des Sensors;
- Übermitteln der gemessenen Messgröße an die Steuerungseinheit;
- Vergleichen der gemessenen Messgröße mit einem Sollwert;
- Steuern des Aktors mittels der Steuerungseinheit, wobei die Stellung der Verschlussvorrichtung derart verändert wird, dass sich die gemessene Messgröße dem Sollwert annähert;
- Wenn der gemessene Druck und der Solldruck im Wesentlichen übereinstimmen, Stoppen des Aktors.

9. Verfahren nach Anspruch 8, **dadurch gekennzeichnet, dass** der Sollwert ein Unterdruck in der Brennkammer gegenüber dem Umgebungsdruck ist.
